# EUROPEAN PATENT APPLICATION

(11) **EP 3 869 365 A1**
(43) Date of publication of application: **25.08.2021**
(21) Application number: 20188717.1
(22) Date of filing: 30.07.2020
(51) Int. Cl.: G06F 21/32

(54) **METHOD AND DEVICE FOR EXECUTING FUNCTION OF ICON, AND STORAGE MEDIUM**

(30) Priority: 20.02.2020 CN 202010105942
(71) Applicant: Beijing Xiaomi Mobile Software Co., Ltd., Beijing 100085 (CN)
(72) Inventor: ZHANG, Yuan, Beijing, Beijing 100085 (CN); ZHONG, Guilin, Beijing, Beijing 100085 (CN)
(74) Representative: dompatent von Kreisler Selting Werner - Partnerschaft von Patent- und Rechtsanwälten mbB

(57) **Abstract**

The embodiments of the present invention relate to a method and device for executing a function associated with an icon, and a storage medium. The method includes: displaying the icon in a predetermined display area of a display screen, wherein a fingerprint detection module is provided at the predetermined display area; detecting an operation on the icon, and acquiring first fingerprint information while the operation is acting on the icon; determining whether the first fingerprint information matches with preset second fingerprint information; and executing the function associated with the icon in response to determining that the first fingerprint information matches with the preset second fingerprint information.

## Description

### TECHNICAL FIELD

The present invention relates to the technical field of terminals, and particularly to a method and device for executing a function associated with an icon.

### BACKGROUND

In order to improve information security, users usually encrypt some information, applications, etc. For example, some applications of a terminal are encrypted by means of application locks, etc. When accessing encrypted information or applications, icons of the encrypted information or applications need to be touched at first, then identity verification is performed through an identity verification interface triggered by the touch operation. The encrypted information or applications are started when the identity verification is passed. Identity verification may be realized by: a password, a fingerprint, etc. The entire accessing process is complicated.

### SUMMARY

In embodiments of the present invention, provided are a method and device for executing a function associated with an icon.

According to a first aspect of embodiments of the present invention, a method for executing a function associated with an icon is provided. The method includes: displaying the icon in a predetermined display area of a display screen, wherein a fingerprint detection module is provided at the predetermined display area; detecting an operation on the icon, and acquiring first fingerprint information while the operation is acting on the icon; determining whether the first fingerprint information matches with preset second fingerprint information; and executing the function associated with the icon in response to determining that the first fingerprint information matches with the preset second fingerprint information. In all embodiments of the present invention, an operation of an icon may be a touch operation or a hovering operation of the icon.

In an embodiment, executing the function associated with the icon in response to determining that the first fingerprint information matches with the preset second fingerprint information includes: in response to determining that the first fingerprint information matches with the preset second fingerprint information, retrieving user information which has pre-established a mapping relationship with the second fingerprint information; and executing, based on the user information, the function associated with the icon.

In an embodiment, executing, based on the user information, the function associated with the icon includes at least one of: logging, with the user information, into an application corresponding to the icon; or unlocking, with the user information, the function corresponding to the icon.

In an embodiment, detecting the operation on the icon includes: detecting a duration of the operation on the icon, when the operation on the icon has been detected; and acquiring the first fingerprint information while the operation is acting on the icon includes: acquiring, by the fingerprint detection module, the first fingerprint information, while the operation continues to act on the icon after the duration of the operation on the icon reaches a first duration.

In an embodiment, the method may further include outputting predetermined information in response to determining that the duration of the operation on the icon ends before reaching the first duration, wherein the predetermined information includes at least one of the following: prompt information for prompting a user to input information for executing the function associated with the icon; or a verification input interface for inputting verification information for executing the function associated with the icon.

In an embodiment, the method may further include: presenting a fingerprint information input interface in response to determining that the first fingerprint information is not matched with the second fingerprint information.

In an embodiment, wherein displaying the icon in the predetermined display area of the display screen includes: displaying the icon in a predetermined full-screen display area of the display screen, wherein the fingerprint detection module is provided at the icon within the full-screen display area; or acquiring a human-machine interaction signal from a user, and displaying the icon in a local area of the display screen based on the human-machine interaction signal, wherein the fingerprint detection module is provided at the icon at least in the local area of the display screen.

In an embodiment, executing the function associated with the icon includes at least one of the following: when the icon is an application icon of an application, starting the application; when the icon is a file icon of a file, opening the file; or when the icon is a control icon of a payment control, executing a payment operation.

In an embodiment, detecting the operation on the icon includes: detecting a touch operation or a hovering operation on the icon.

In an embodiment, detecting the operation on the icon includes: detecting a touch duration of the touch operation on the icon, or detecting a hovering duration of the hovering operation on the icon; and executing the function associated with the icon includes: executing, based on the touch duration or the hovering duration, the function associated with the icon.According to a second aspect of embodiments of the present invention, a device for executing a function associated with an icon is provided. The device includes a first display module, an acquisition module, a determination module and an execution module. The first display module is configured to display the icon in a predetermined display area of a display screen, wherein a fingerprint detection module is provided at the predetermined display area; the acquisition module is configured to detect an operation on the icon, and acquire first fingerprint information while the operation is acting on the icon; the determination module is configured to determine whether the first fingerprint information matches with preset second fingerprint information; and the execution module is configured to execute the function associated with the icon in response to determining that the first fingerprint information matches with the preset second fingerprint information.

In an embodiment, the execution module includes, a first execution sub-module configured to: in response to determining that the first fingerprint information matches with the preset second fingerprint information, retrieve user information which has pre-established a mapping relationship with the second fingerprint information; and execute, based on the user information, the function associated with the icon.

In an embodiment, the first execution sub-module includes at least one of: a first execution unit, configured to log, with the user information, into an application corresponding to the icon; or a second execution unit, configured to unlock, with the user information, the application corresponding to the icon.

In an embodiment, the acquisition module includes: a timing sub-module, configured to detect a duration of the operation on the icon, when the operation on the icon has been detected; and a first acquisition sub-module, configured to acquire, by the fingerprint detection module, the first fingerprint information, while the operation continues to act on the icon after the duration of the operation on the icon reaches a first duration.

In an embodiment, the device may further include a second display module, configured to output predetermined information in response to determining that the duration of the operation on the icon ends before reaching the first duration, wherein the predetermined information comprises at least one of the following: prompt information for prompting a user to input information for executing the function associated with the icon; or a verification input interface for inputting verification information for executing the function associated with the icon.

In an embodiment, the device may further include: a third display module, configured to present a fingerprint information input interface in response to determining that the first fingerprint information is not matched with the second fingerprint information.

In an embodiment, the first display module includes: a first display sub-module, configured to display the icon in a predetermined full-screen display area of the display screen, wherein the fingerprint detection module is provided at the icon within the full-screen display area; or a second display sub-module, configured to acquire a human-machine interaction signal from a user, and display the icon in a local area of the display screen based on the human-machine interaction signal, wherein the fingerprint detection module is provided at the icon at least in the local area of the display screen.

In an embodiment, the execution module includes at least one of the following: a second execution sub-module, configured to: when the application icon is an application icon of an application, start the application; a third execution sub-module, configured to: when the icon is a file icon of a file, open the file; or a fourth execution sub-module, configured to: when the icon is a control icon of a payment control, execute a payment operation.

In an embodiment, the acquisition module includes: a second acquisition sub-module, configured to detect a touch operation or a hovering operation on the icon.

In an embodiment, the second acquisition sub-module includes: an acquisition unit, configured to detect a touch duration of the touch operation on the icon, or detect a hovering duration of the hovering operation on the icon; and the execution module includes: a fifth execution sub-module, configured to execute, based on the touch duration or the hovering duration, the function associated with the icon.

According to a third aspect of embodiments of the present invention, a device for executing a function associated with an icon is provided. The device includes a processor, and a memory with a processor-executable program stored thereon, wherein the the processor, when running the processor-executable program, is configured to perform the steps of the method for executing a function associated with an icon of the first aspect.

According to a fourth aspect of embodiments of the present invention, provided is a storage medium with an executable program stored thereon, wherein the executable program, when executed by a processor, causes the processor to implement the steps of the method for executing a function associated with an icon of the first aspect.

According to the method and device for executing a function associated with an icon, and the storage medium provided in the embodiments of the present invention, a fingerprint detection module is provided at a predetermined display area; an operation on the icon is detected, and first fingerprint information is acquired while the operation is acting on the application icon; whether the first fingerprint information matches with preset second fingerprint information is determined; and a function set for the application icon is executed in response to determining that the first fingerprint information matches with the preset second fingerprint information. In this way, through one touch operation, the identity verification required for executing the function associated with the application icon, and start of the function associated with the application icon can both be implemented, thereby simplifying the operation and improving the efficiency of the touch operation.

It should be understood that the above general description and the following detailed description are merely exemplary and explanatory, but do not limit the embodiments of the present invention.

### BRIEF DESCRIPTION OF THE DRAWINGS

The accompanying drawings, which are incorporated in and constitute a part of this specification, illustrate embodiments consistent with the present invention and, together with the specification, serve to explain the principles of the embodiments of the present invention.
FIG. 1 illustrates a schematic flow diagram of a method for executing a function associated with an icon according to an exemplary embodiment.
FIG. 2 illustrates a schematic diagram of a position of an icon display area according to an exemplary embodiment.
FIG. 3 illustrates another schematic diagram of the position of the icon display area according to an exemplary embodiment.
FIG. 4a illustrates a further schematic diagram of the position of the icon display area according to an exemplary embodiment.
FIG. 4b illustrates a further schematic diagram of the position of the icon display area according to an exemplary embodiment.
FIG. 5 illustrates a schematic flow diagram of a method for executing a function associated with an icon in a terminal according to an exemplary embodiment.
FIG. 6 illustrates a schematic structural diagram of composition of a device for executing a function associated with an icon according to an exemplary embodiment.
FIG. 7 illustrates another schematic structural diagram of the composition of the device for executing a function associated with an icon according to an exemplary embodiment.
FIG. 8 illustrates a further schematic structural diagram of the composition of the device for executing a function associated with an icon according to an exemplary embodiment.
FIG. 9 illustrates a further schematic structural diagram of the composition of the device for executing a function associated with an icon according to an exemplary embodiment.
FIG. 10 illustrates a further schematic structural diagram of the composition of the device for executing a function associated with an icon according to an exemplary embodiment.
FIG. 11 illustrates a block diagram of a device for executing a function associated with an icon according to an exemplary embodiment.

### DETAILED DESCRIPTION

Exemplary embodiments will be described in detail herein, examples of which are illustrated in the accompanying drawings. When the following description refers to the accompanying drawings, the same numbers in different drawings represent the same or similar elements unless otherwise indicated. The implementations set forth in the following description of exemplary embodiments do not represent all implementations consistent with the embodiments of the present invention. Instead, they are merely examples of devices and methods consistent with aspects related to the embodiments of the present invention as recited in the appended claims.

The terms used in the embodiments of the present invention are for the purpose of describing particular embodiments only, and are not intended to limit the embodiments of the present invention. "A/an", "the" and "this" in a singular form in the embodiments of the present invention and the appended claims are also intended to include a plural form, unless other meanings are clearly denoted throughout the present invention. It should also be understood that the term "and/or" as used herein refers to and includes any or all possible combinations of one or more associated listed items.

It is to be understood that although the terms first, second, third, etc. may be used in the embodiments of the present invention to describe various information, such information should not be limited to these terms. These terms are used only to distinguish information of the same type from each other. For example, without departing from the scope of the embodiments of the present invention, first information may also be called second information and, similarly, second information may also be called first information. Depending on the context, the word "if" as used herein may be explained as "when...", "while" or "in response to determining".

The execution subjects involved in the embodiments of the present invention include, but not limited to, a terminal with an under-screen fingerprint recognition function, and the like.

The application scenes of the embodiments of the present invention include, but are not limited to, application locks. In the related art, unlocking steps include: step A: an application icon to be opened is clicked; step B: an identity verification information input interface, such as a fingerprint input interface and a password input interface, are popped up; and step C: a fingerprint is entered for unlocking, and the application is entered. The steps are relatively complicated.

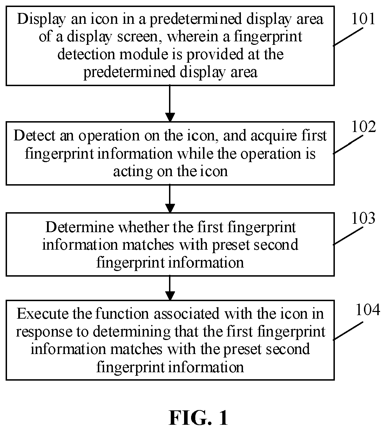

As illustrated in FIG. 1, in the exemplary embodiment, provided is a method for executing a function associated with an icon. The method for executing a function associated with an icon may be applied to a terminal and includes steps 101, 102, 103 and 104.

In step 101, an icon is displayed in a predetermined display area of a display screen. A fingerprint detection module is provided at the predetermined display area.

In step 102, an operation on the icon is detected, and first fingerprint information is acquired while the operation is acting on the icon.

In step 103, whether the first fingerprint information matches with preset second fingerprint information is determined.

In step 104, the function associated with the icon is executed in response to determining that the first fingerprint information matches with the preset second fingerprint information.

Here, the terminal may be such as a mobile phone with an under-screen fingerprint recognition function. The under-screen fingerprint recognition technology refer to a technology that fingerprint recognition is completed by a fingerprint detection module under a screen when a finger is placed on the screen. The fingerprint detection module may realize fingerprint recognition on the display screen in a full-screen manner or locally by using ultrasonic waves, infrared light, etc. penetrating through the screen.

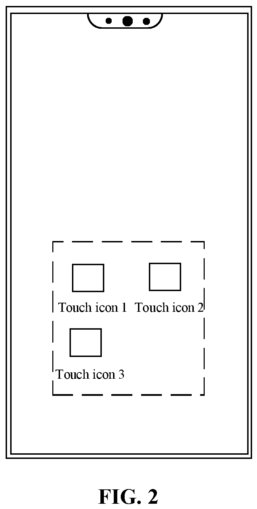

The predetermined display area may be the entire display screen or a part of the display screen. As in a display screen of a terminal illustrated in FIG. 2, an icon may be displayed in a fingerprint recognition range of the fingerprint detection module indicated by dotted lines. Here, the icon may be an application icon of an application or a file icon of a file. The fingerprint recognition range may include one or more icons. When a full-screen fingerprint recognition technology is used in the fingerprint detection module, the method in the example of the present invention may be applied to the entire display screen. When the fingerprint detection module can only realize fingerprint recognition on the display screen locally, the method in the example of the present invention may be applied to the area where the fingerprint detection module may perform fingerprint recognition.

Here, the operation may be a touch operation or a hovering operation. The touch operation on the display screen or the hovering operation over the display screen may be sensed through a capacitive sensing function. The fingerprint detection module may sense a fingerprint touching the display screen or hovering at a certain distance from the display screen.

When a user operates the icon within the fingerprint recognition range, the fingerprint detection module acquires the first fingerprint information of the operation. If the first fingerprint information matches with the second fingerprint information preset for the icon, the function associated with the icon is started. The function associated with the icon may be a function that can be started only after identity verification is passed. For example, the function is executed by unlocking a lock of the function. The second fingerprint information may be preset identity verification information of the function associated with the icon.

The matching of the first fingerprint information with the second fingerprint information may include the situations where the first fingerprint information is identical to the second fingerprint information, the degree of similarity between the first fingerprint information and the second fingerprint information is greater than a preset similarity threshold, or the like. For example, the similarity threshold may be set to be 95%. If the degree of similarity between the first fingerprint information and the second fingerprint information is greater than 95%, the first fingerprint information is considered to be matched with the second fingerprint information. Otherwise, the first fingerprint information is considered to be not matched with the second fingerprint information. The similarity comparison between the first fingerprint information and the second fingerprint information may be a similarity comparison of feature points of fingerprints.

In this way, when the user operates the icon, identity verification for the icon, and execution of the function associated with the icon may be completed at the same time. The operation of the icon, the input of the identity verification information, the execution of the function associated with the icon, and the like may be completed in one operation, thereby simplifying the operation and improving the operation efficiency.

In an embodiment, the step 104 may include that: in response to determining that the first fingerprint information matches with the preset second fingerprint information, user information which has pre-established a mapping relationship with the second fingerprint information is retrieved; and the function associated with the icon is executed based on the user information.

User information usually needs to be input for executing the function associated with the icon. The user information may be used for user login or user information input. Here, the user information has pre-established a mapping relationship with the second fingerprint information. If the first fingerprint information matches with the second fingerprint information, the user information may be used for login or input.

In an embodiment, the step that the function associated with the icon is executed based on the user information includes at least one of: an application corresponding to the icon is logged into with the user information; or the function corresponding to the icon is unlocked with the user information.

The user information may be user login information. Here, the user login information has pre-established a mapping relationship with the second fingerprint information. If the first fingerprint information matches with the second fingerprint information, the function associated with the icon may be executed, and the application may be logged into with the user information. After the user logs into the application, different access rights or different specific functions may be implemented for the user having logged in.

Exemplarily, the icon is an application icon of an application. The application is preset with second fingerprint information, the second fingerprint information has pre-established a mapping relationship with user information. The user information may be verification information or authentication information for login of a specific user of the application. The verification information or authentication information for user login may include a user name, password information, and the like. When the application icon is operated, the fingerprint detection module acquires fingerprint information during the operation. The acquired fingerprint information is compared with the second fingerprint information. If the acquired fingerprint information matches with the second fingerprint information, the application is logged into with the user information having pre-established the mapping relationship with the second fingerprint information.

The user information may also be unlocking information of a lock of the function corresponding to the icon. Here, the unlocking information has pre-established a mapping relationship with the second fingerprint information. If the first fingerprint information matches with the second fingerprint information, the lock of the function corresponding to the icon may be unlocked.

In an embodiment, the step 102 may include that: a duration of the operation on the icon is detected, when the operation on the icon has been detected; and the first fingerprint information is acquired by the fingerprint detection module, while the operation continues to act on the icon after the duration of the operation on the icon reaches a first duration.

Here, the first fingerprint information may be acquired only for a specific operation. The specific operation may be an operation of which a continuous touch duration reaches the first duration, etc. Exemplarily, the first duration may be 1 second. When the touch duration of a user's finger on the icon reaches 1 second, the fingerprint detection module starts to acquire the first fingerprint information and performs fingerprint matching. In this way, for different touch operations, different operation responses may be given, thus improving flexibility.

In an embodiment, the method further includes: predetermined information is output in response to determining that the duration of the operation on the icon ends before reaching the first duration. The predetermined information includes at least one of the following: prompt information for prompting a user to input information for executing the function associated with the icon; or a verification input interface for inputting verification information for executing the function associated with the icon.

For an icon for which identity verification steps such as fingerprint recognition must be carried out before executing the set function, if the touch duration ends before reaching the first duration, an interaction interface may be displayed to prompt the user to perform identity verification.

The prompt information may be provided in a form of a pop-up window. When the touch duration ends without reaching the first duration, the prompt information is popped up. The prompt information may be configured to prompt a touch duration required for executing the function associated with the icon, prompt the user to select a user verification mode, or the like.

The interaction interface may also be a verification input interface. The verification input interface may be a fingerprint input interface, a user name and password input interface, or the like. The user may input the verification information through the verification input interface to execute the function associated with the icon.

In an embodiment, the step that the first fingerprint information is acquired by the fingerprint detection module, while the operation continues to act on the icon after the duration of the touch operation on the icon reaches a first duration includes that: when an operating system of an electronic device detects that the duration of the touch operation on the icon reaches the first duration, a fingerprint detection program of the started fingerprint detection module is used to acquire the first fingerprint information while the operation continues to act on the icon.

Here, the touch operation of the user may be sensed by a touch sensor in the electronic device, and the touch duration may be detected by the operating system. The electronic device may be a terminal device such as a mobile phone. The operating system may be an operating system in a mobile phone. The operating system may detect the touch duration through an additional program.

When the touch duration reaches the first duration, the operating system may use the fingerprint detection program to drive the fingerprint detection module to acquire the first fingerprint information.

In some embodiments, the fingerprint detection module may be a normally on module, that is, the fingerprint detection module is started while the terminal device is started. As such, the fingerprint detection module may be used to acquire a fingerprint during the touch process once a touch operation is detected.

In some other embodiments, in order to reduce the power consumption of the fingerprint detection module, the fingerprint detection module is started only after an operation is detected. As such, the first duration may be determined according to the duration required for the fingerprint detection module to switch from an off state to an on state.

In some embodiments, when it is detected that the screen is lightened up, the fingerprint detection module is started in advance, to increase the response speed during the fingerprint recognition.

In an embodiment, the method further includes that: a fingerprint information input interface is presented in response to determining that the first fingerprint information is not matched with the second fingerprint information.

If the first fingerprint information is not matched with the second fingerprint information, the terminal may display a prompt interface. The prompt interface may include such as identity verification failure prompt information and/or an identity verification information input interface. The identity verification information input interface may be used for the user to input a fingerprint or password again.

In an embodiment, the step that the icon is displayed in the predetermined display area of the display screen includes that: the icon is displayed in a predetermined full-screen display area of the display screen, wherein the fingerprint detection module is provided at the icon within the full-screen display area; or a human-machine interaction signal is acquired from a user, and the icon is displayed in a local area of the display screen based on the human-machine interaction signal, wherein the fingerprint detection module is provided at the icon at least in the local area of the display screen.

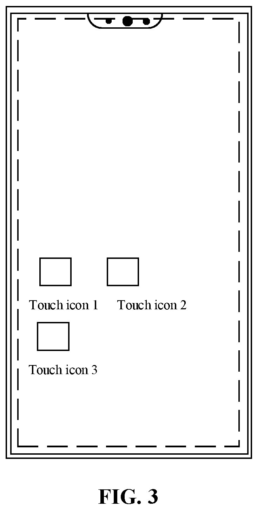

Here, as illustrated in FIG. 3, the fingerprint detection module may detect a fingerprint for the full-screen display area of the display screen indicated by the dotted lines. Thus, fingerprint detection may be realized for each of icons in the full-screen display area. Alternatively, the fingerprint detection module may also be arranged only for an icon in the full-screen display area, for example, one fingerprint detection module is provided for one icon under the display screen. Thus, fingerprint detection may be realized for icons on the full screen.

In some other embodiments, as illustrated in FIG. 2, the human-machine interaction signal may be an instruction of the user specifying a local area. The user may specify a local area for fingerprint detection. The fingerprint detection module only detects a fingerprint for the operation on the icon in the specified local area, and does not perform fingerprint detection beyond the specified local area. The workload of the fingerprint detection module can be reduced, and electric energy can be saved.

In an embodiment, when the display screen is in a portrait-screen state, the predetermined display area includes a bottom half of the display screen. When the display screen is in a landscape-screen state, the predetermined display area includes a right half of the display screen.

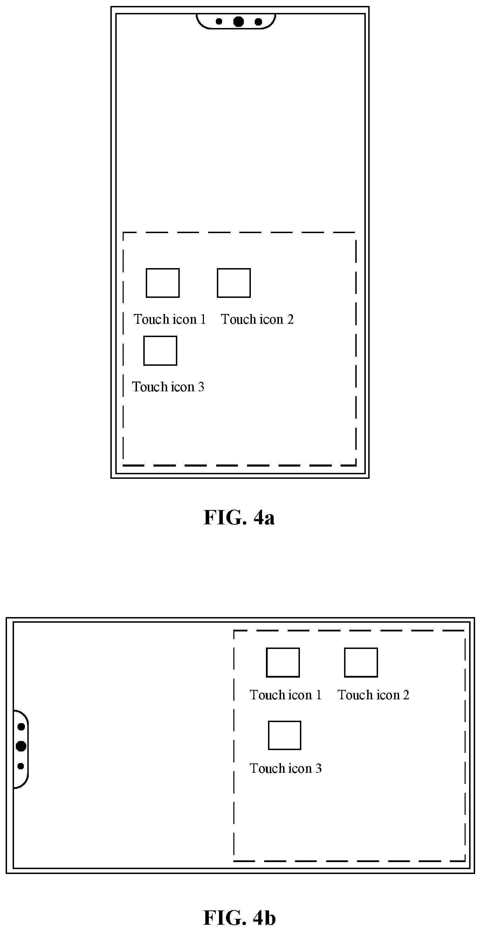

Here, for different operation habits, the display area may be provided at a part of the display screen close to the user's holding hand. Exemplarily, with a right-handed operation habit as an example, as illustrated by the dotted box in FIG. 4a, in the portrait-screen state, the display area is provided at the bottom half of the display screen. As illustrated by the dotted box in FIG. 4b, in the landscape-screen state, the display area is provided at the right half of the display screen. Therefore, the user may conveniently perform the touch operation.

In an embodiment, the step that the function associated with the icon is executed includes at least one of the following: when the icon is an application icon of an application, the application is started; when the icon is a file icon of a file, the file is opened; and when the icon is a control icon of a payment control, a payment operation is executed.

The application may have such as an application lock that requires access identity verification. For example, the application may be an application with high security requirements. Before such an application is started, identity verification is required, and the application will be started only if the identity verification is passed. Here, by means of the method according to the embodiments of the present invention, when a user operates an icon of an application, the fingerprint detection module may acquire the first fingerprint information of the operation and compare the preset second fingerprint information with the first fingerprint information. If the second fingerprint information matches with the first fingerprint information, the user is deemed to have an operation right, and the application is started. By means the method according to the embodiments of the present invention, the steps of executing an application having such as an application lock that requires identity verification requirement may be simplified, and the efficiency of starting the encrypted application may be improved.

The file may be encrypted by such as a fingerprint. Before such a file is opened, identity verification is required, and the file can be opened only if the identity verification is passed. Here, by means of the method according to the embodiments of the present invention, when a user operates a file icon of a file, the fingerprint detection module may acquire first fingerprint information of the operation and compare the preset second fingerprint information with the first fingerprint information. If the second fingerprint information matches with the first fingerprint information, the user is deemed to have an access right, and the file is opened. By means the method according to the embodiments of the present invention, the steps of accessing an encrypted file may be simplified, and the efficiency of opening the encrypted file may be improved.

The payment control may be a control for network payment. The payment control usually has high security requirements. Usually, when the payment control is executed, bar code information for payment is displayed, or payment is implemented directly. Here, by means the method according to the embodiments of the present invention, when a user operates a control icon of an application, the fingerprint detection module may acquire first fingerprint information of the operation and compare the preset second fingerprint information with the first fingerprint information. If the second fingerprint information matches with the first fingerprint information, the user is deemed to have an operation right, and the payment control is started. By means of the method according to the embodiments of the present invention, the steps of executing the payment control may be simplified.

In an embodiment, the step 102 may include: a touch operation or a hovering operation on the icon is detected.

Here, the operation may be a touch operation or a hovering operation. The touch operation or the hovering operation may be sensed through a capacitive sensing function by the display screen. A finger touching the icon on display screen or hovering at a certain distance above the icon on the display screen by means of such as capacitive sensing by the display screen.

The fingerprint detection module may detect, by means of such as capacitive sensing or infrared scanning, a fingerprint of the finger touching the icon on the display screen or hovering at a certain distance above the icon on the display screen.

In an embodiment, the step 102 may include: a touch duration of the touch operation on the icon is detected, or a hovering duration of the hovering operation on the icon is detected.

The step that the function associated with the icon is executed includes: the function associated with the icon is executed based on the touch duration or the hovering duration.

Different functions may be associated with different durations of operations on icons.

Exemplarily, for a short-time touch operation, such as a touch operation with a touch duration shorter than 1 second, an application corresponding to an icon may be started, or a file corresponding to an icon may be opened, or the like. The fingerprint detection module may detect a fingerprint within the touch duration. When the fingerprint matches, the application is started, or the file is opened. Otherwise, the application is not started, or the file is not opened.

For a long-time touch operation, such as a touch operation with a touch duration longer than 1 second, an operation dialog box of an application corresponding to an icon may be displayed, or an operation dialog box of a file corresponding to an icon may be opened, or the like. The fingerprint detection module may detect a fingerprint within the touch duration. When the fingerprint matches, the operation dialog box is displayed. Otherwise, the operation dialog box is not displayed.

For a short-time hovering operation, such as a hovering operation with a hovering duration shorter than 1 second, an application corresponding to an icon may be started, or a file corresponding to an icon may be opened, or the like. The fingerprint detection module may detect a fingerprint within the hovering duration. When the fingerprint matches, the application is started, or the file is opened. Otherwise, the application is not started, or the file is not opened.

For a long-time hovering operation, such as a hovering operation with a hovering duration longer than 1 second, an operation dialog box of an application corresponding to an icon may be displayed, or an operation dialog box of a file corresponding to an icon may be opened, or the like. The fingerprint detection module may detect a fingerprint within the hovering duration. When the fingerprint matches, the operation dialog box is displayed. Otherwise, the operation dialog box is not displayed.

A particular example is provided below in combination with any of the above embodiments:

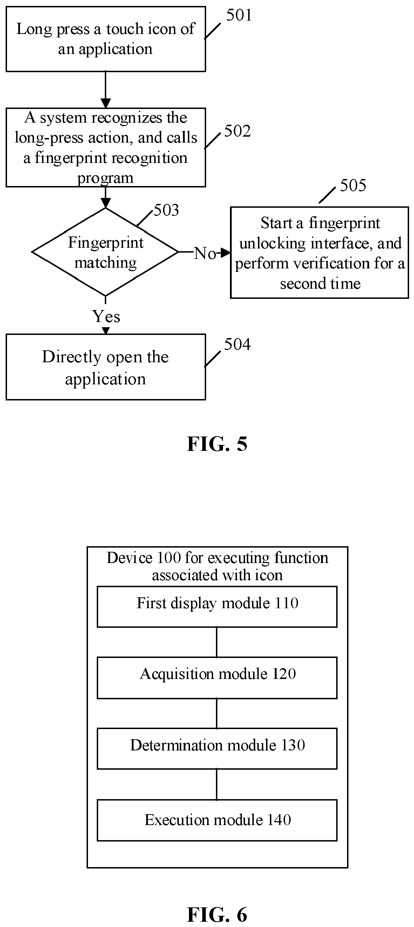

1. The particular steps for starting an application with an application lock in a terminal using the method according to the embodiments of the present invention are illustrated in FIG. 5 and include the following steps 501, 502, 503, 504 and 505.

In step 501, an application icon of the application is touched. The application icon is within a fingerprint recognition range of a display screen.

In step 502, if a system recognizes that the touch operation is a preset long-press action, a fingerprint of the touch operation is acquired, and fingerprint matching is performed.

In step 503, if the fingerprint matching is successful, step 504 is executed, otherwise, step 505 is executed.

In step 504, the application is unlocked and started.

In step 505, a dialog interface is popped up to prompt that the fingerprint is not matched, and a secondary fingerprint input interface, a password input interface or the like are provided, so that a user performs unlocking again.

2. The method according to the embodiments of the present invention may also be applied to applications with a user login function.

A mobile phone has an intelligent function of password management. After fingerprint authentication, user login information may be automatically filled in for different records.

When the application icon of the application is clicked by means of a short-time pressing and the like, the application is in a not-logged-in state, and a login dialog interface and the like may be popped up. When the finger with a recorded fingerprint long presses the application icon of the application, the fingerprint recognition function may be used. After successful authentication, user login information may be automatically filled in, and the application is entered in a logged-in state. In a similar way, the operation is also applicable to various types of bank software needing fingerprint verification before opening user information.

In embodiments of the present invention, also provided is a device for executing a function associated with an icon. FIG. 6 illustrates a schematic structural diagram of composition of a device for executing a function associated with an icon 100 provided in an embodiment of the present invention. As illustrated in FIG. 6, the device 100 includes a first display module 110, an acquisition module 120, a determination module 130 and an execution module 140.

The first display module 110 is configured to display the icon in a predetermined display area of a display screen. A fingerprint detection module is provided at the predetermined display area.

The acquisition module 120 is configured to detect an operation on the icon, and acquire first fingerprint information while the operation is acting on the icon.

The determination module 130 is configured to determine whether the first fingerprint information matches with preset second fingerprint information.

The execution module 140 is configured to execute the function associated with the icon in response to determining that the first fingerprint information matches with the preset second fingerprint information.

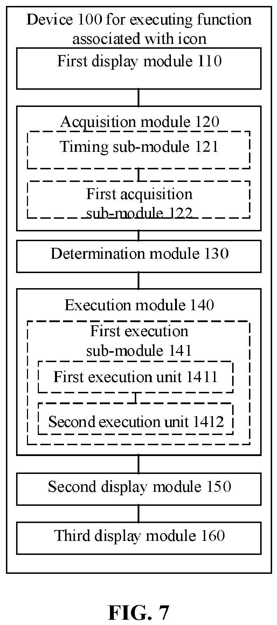

In an embodiment, as illustrated in FIG. 7, the execution module 140 includes a first execution sub-module 141.

The first execution sub-module 141 is configured to: in response to determining that the first fingerprint information matches with the preset second fingerprint information, retrieve user information which has pre-established a mapping relationship with the second fingerprint information; and execute, based on the user information, the function associated with the icon.

In an embodiment, as illustrated in FIG. 7, the first execution sub-module 141 includes at least one of: a first execution unit 1411 or a second execution unit 1412.

The first execution unit 1411 configured to log, with the user information, into an application corresponding to the icon.

The second execution unit 1412 configured to unlock, with the user information, the application corresponding to the icon.

In an embodiment, as illustrated in FIG. 7, the acquisition module 120 includes: a timing sub-module 121 and a first acquisition sub-module.

The timing sub-module 121 is configured to detect a duration of the operation on the icon, when the operation on the icon is detected.

The first collecting sub-module 122 is configured to acquire, by the fingerprint detection module, the first fingerprint information, while the operation continues to act on the icon after the duration of the operation on the icon reaches a first duration.

In an embodiment, as illustrated in FIG. 7, the device 100 further includes a second display module 150.

The second display module 150 is configured to output predetermined information in response to determining that the duration of the operation on the icon ends before reaching the first duration. The predetermined information includes at least one of the following: prompt information for prompting a user to input information for executing the function associated with the icon; or a verification input interface for inputting verification information for executing the function associated with the icon.

In an embodiment, as shown in FIG. 7, the device 100 further includes a third display module 160.

The third display module 160 is configured to present a fingerprint information input interface in response to determining that the first fingerprint information is not matched with the second fingerprint information.

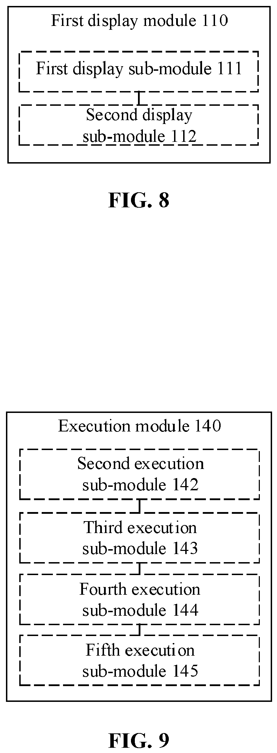

In an embodiment, as illustrated in FIG. 8, the first display module 110 includes one of: a first display sub-module 111 or a second display sub-module 112.

The first display sub-module 111 is configured to display the icon in a predetermined full-screen display area of the display screen. The fingerprint detection module is provided at the icon within the full-screen display area range.

The second display sub-module 112 is configured to acquire a human-machine interaction signal from a user, and display the icon in a local area of the display screen based on the human-machine interaction signal. The fingerprint detection module is provided at the icon at least in the local area of the display screen.

In an embodiment, as illustrated in FIG. 9, the execution module 140 includes at least one of the following: a second execution sub-module 142, a third execution sub-module 143, or a fourth execution sub-module 144.

The second execution sub-module 142 is configured to: when the icon is an application icon of an application, start the application.

The third execution sub-module 143 is configured to: when the icon is a file icon of a file, open the file.

The fourth execution sub-module 144 is configured to: when the icon is a control icon of a payment control, execute a payment operation.

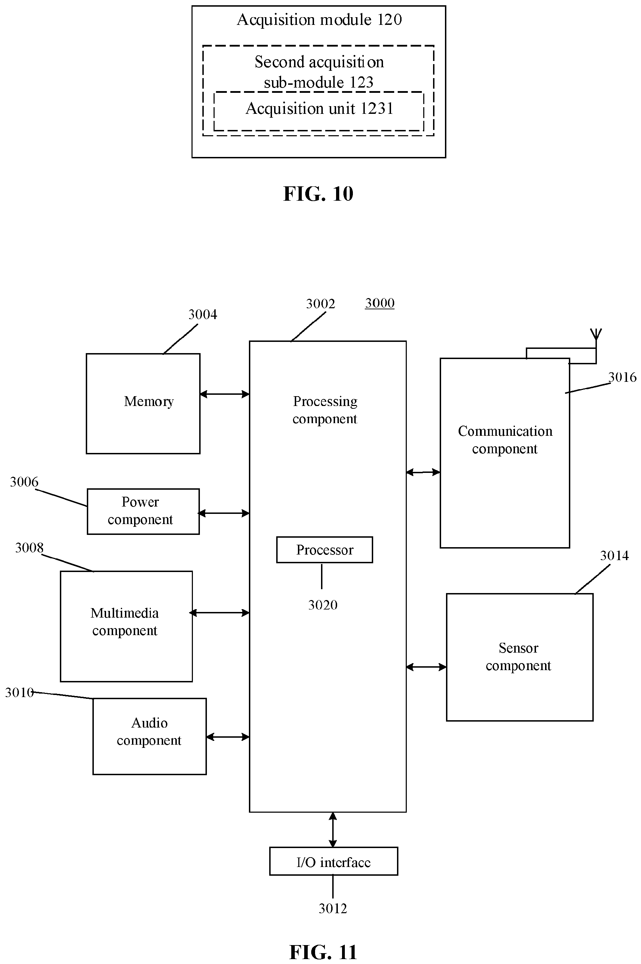

In an embodiment, as illustrated in FIG. 10, the acquisition module 120 includes a second acquisition sub-module 123.

The second acquisition sub-module 123 is configured to detect a touch operation or a hovering operation on the icon.

In an embodiment, the second acquisition sub-module 123 includes an acquisition unit 1231. The acquisition unit 1231 is configured to detect a touch duration of the touch operation on the icon, or detect a hovering duration of the hovering operation on the icon.

The execution module 140 includes a fifth execution sub-module 145. The fifth execution sub-module 145 is configured to execute, based on the touch duration or the hovering duration, the function associated with the icon.

## Claims

1. A method for executing a function associated with an icon, executed by a terminal comprising a display screen including a predetermined display area and the method comprising:
displaying (101) the icon in the predetermined display area of the display screen, wherein a fingerprint detection module is provided at the predetermined display area;
detecting (102) an operation on the icon, and acquiring first fingerprint information while the operation is acting on the icon;
determining (103) whether the first fingerprint information matches with preset second fingerprint information; and
executing (104) the function associated with the icon in response to determining that the first fingerprint information matches with the preset second fingerprint information.

2. The method of claim 1, wherein executing (104) the function associated with the icon in response to determining that the first fingerprint information matches with the preset second fingerprint information comprises:
in response to determining that the first fingerprint information matches with the preset second fingerprint information, retrieving user information which has pre-established a mapping relationship with the second fingerprint information; and
executing, based on the user information, the function associated with the icon.

3. The method of claim 2, wherein executing, based on the user information, the function associated with the icon comprises at least one of:
logging, with the user information, into an application corresponding to the icon; or
unlocking, with the user information, the function corresponding to the icon.

4. The method of any one of claims 1 to 3, wherein
detecting the operation on the icon comprises:
detecting a duration of the operation on the icon, when the operation on the icon has been detected; and
acquiring the first fingerprint information while the operation is acting on the icon comprises:
acquiring, by the fingerprint detection module, the first fingerprint information, while the operation continues to act on the icon after the duration of the operation on the icon reaches a first duration.

5. The method of claim 4, further comprising:
outputting predetermined information in response to determining that the duration of the operation on the icon ends before reaching the first duration, wherein the predetermined information comprises at least one of the following:
prompt information for prompting a user to input information for executing the function associated with the icon; or
a verification input interface for inputting verification information for executing the function associated with the icon.

6. The method of any one of claims 1 to 3, further comprising:
presenting a fingerprint information input interface in response to determining that the first fingerprint information is not matched with the second fingerprint information.

7. The method of any one of claims 1 to 3, wherein, displaying the icon in the predetermined display area of the display screen comprises:
displaying the icon in a predetermined full-screen display area of the display screen, wherein the fingerprint detection module is provided at the icon within the full-screen display area.

8. The method of any one of claims 1 to 3, wherein, displaying the icon in the predetermined display area of the display screen comprises:
acquiring a human-machine interaction signal from a user, and displaying the icon in a local area of the display screen based on the human-machine interaction signal, wherein the fingerprint detection module is provided at the icon at least in the local area of the display screen.

9. The method of any one of claims 1 to 3, wherein executing the function associated with the icon comprises at least one of the following:
when the icon is an application icon of an application, starting the application;
when the icon is a file icon of a file, opening the file; or
when the icon is a control icon of a payment control, executing a payment operation.

10. The method of any one of claims 1 to 3, wherein detecting the operation on the icon comprises:
detecting a touch operation or a hovering operation on the icon.

11. The method of claim 9, wherein
detecting the operation on the icon comprises: detecting a touch duration of the touch operation on the icon; and
executing the function associated with the icon comprises: executing, based on the touch duration, the function associated with the icon.

12. The method of claim 9, wherein
detecting the operation on the icon comprises: detecting a hovering duration of the hovering operation on the icon; and
executing the function associated with the icon comprises: executing, based on the hovering duration, the function associated with the icon.

13. The method of claim 4, acquiring, by the fingerprint detection module, the first fingerprint information comprises one of:
acquiring the first fingerprint information with the fingerprint detection module normally on;
acquiring the first fingerprint information with the fingerprint detection module started only when the operation is detected; or
acquiring the first fingerprint information with the fingerprint detection module started immediately after the display screen is lightened up.

14. A device for executing a function associated with an icon, comprising:
a processor, and
a memory with a processor-executable program stored thereon,
wherein the processor, when running the processor-executable program, is configured to perform the steps of the method for executing a function associated with an icon of any one of claims 1 to 13.

15. A storage medium with an executable program stored thereon, wherein the executable program, when executed by a processor, causes the processor to implement the steps of the method for executing a function associated with an icon of any one of claims 1 to 13.
